Europäisches Patentamt

European Patent Office

Office européen des brevets

(19)

(11) Publication number: **0 118 781**

**A2**

(12) **EUROPEAN PATENT APPLICATION**

(21) Application number: **84101399.8**

(22) Date of filing: **10.02.84**

(51) Int. Cl.³: **G 06 F 9/44**
**G 06 F 15/06**

(30) Priority: **10.02.83 JP 20863/83**

(43) Date of publication of application:
**19.09.84 Bulletin 84/38**

(84) Designated Contracting States:
**AT BE CH DE FR GB IT LI LU NL SE**

(71) Applicant: **Sowa, Masahiro**
**232-3, Hakoda-Cho**
**Maebashi-shi Gunma-ken(JP)**

(72) Inventor: **Sowa, Masahiro**
**232-3, Hakoda-Cho**
**Maebashi-shi Gunma-ken(JP)**

(74) Representative: **Wilhelms, Rolf E., Dr. et al,**
**WILHELMS & KILIAN Patentanwälte**
**Eduard-Schmid-Strasse 2**
**D-8000 München 90(DE)**

(54) **Control flow parallel computer system.**

(57) A control flow parallel computer incorporating a node drive register which designates the location of executable instructions. The node drive register allows the instructions to be executed concurrently and nondeterministically without incurring complexity in control.

EP 0 118 781 A2

Croydon Printing Company Ltd.

BACKGROUND OF THE INVENTION

The present invention relates to a control flow parallel computer system.

There have been proposed various data flow computer architectures which are destined and suited for parallel processings. However, they suffers shortcomings such as complexity of the interconnection network and the control circuit

SUMMARY OF THE INVENTION

An object of the present invention is to provide a control flow parallel computer system including a plurality of processors which are capable of executing control flow parallel processings concurrently and nondeterministically with a simplified hardware structure without invloving complicated control and interconnection.

It is another object of the present invention to provide a control flow parallel computer system for performing processings in accordance with a flow of tokens which are referred to as the control tokens and designate executable instructions.

In view of the above objects, there is proposed according to an aspect of the invention a control flow parallel computer system which includes a register or memory referred to as the node drive register (NDR) which corresponds to the program counter of the conventional stored program serial computer and adapted to store control tokens and a pointer indicating a relevant instruction, to thereby designate the executable instruction. According to the teaching of the present invention, the control flow parallel processing can be realized in a reasonable and nondeterministical manner with a simplified hardware structure and control. Thus, the invention makes a significant contribution to practicability of the parallel processing computer.

BRIEF DESCRIPTION OF THE DRAWINGS

Fig. 1 is a view showing relationships between a control flow program and a token packet;

Fig. 2 is a block diagram showing schematically an arrangement of the control flow parallel computer according to an embodiment of the invention; and

Fig. 3 is a view for illustrating a format of a word of a node drive register.

DESCRIPTION OF THE PREFERRED EMBODIMENTS

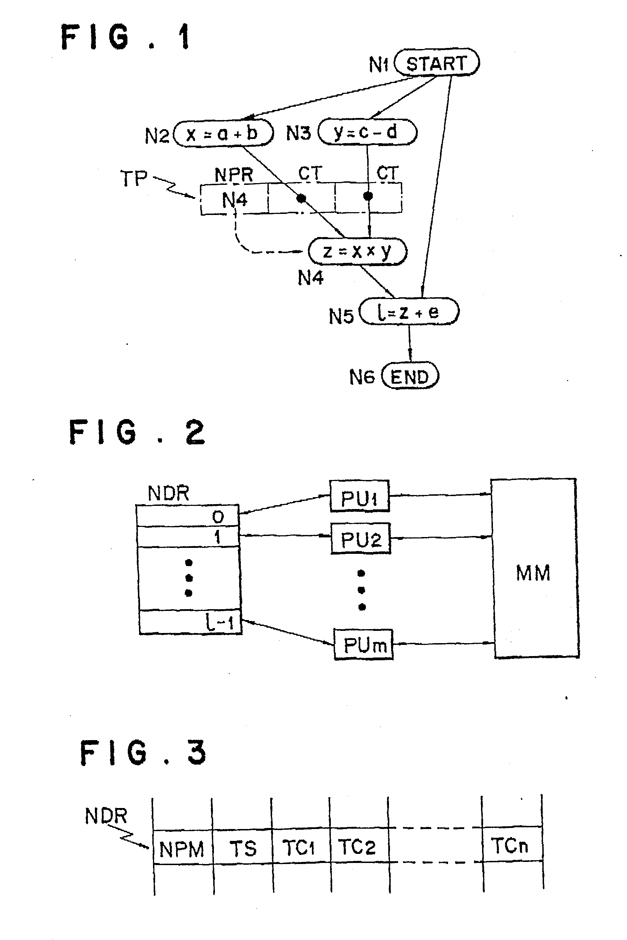

Fig. 1 is a view illustrating graphically an example of a program for a control flow parallel computer to perform a calculation which is assumed to be, for example, represented by $l = (a + b)(c - d) + e$. This calculation is effected in terms of $x = a + b$, $y = c - d$, $z = x \times y$ and $l = z + e$ at separate steps referred to nodes and denoted by N.

More particularly, the nodes or unit processings are represented by ellipses N1 to N6, respectively, wherein the contents of the nodes to processed are shown within the associated ellipses. The node interconnecting lines with arrows are referred to as the arcs which are classified into the incoming (input) and outgoing (output) arcs in dependence on the directions of the attached arrows. The processing at each node is initiated when one or more control tokens (indicated by solid circles in

0118781

Fig. 1) are present at the associated incoming arc or arcs. Upon completion of the processing, the control token is removed from the incoming arc of the associated node, while a new control token is put out on the outgoing arc of the node. A combination of a node and the outgoing arc thereof corresponds to an instruction word in the conventional computer. The control token or tokens to be put in to a single node are combined with a node pointer (NPR) indicating the node to which the control token or tokens are to be inputted to thereby constitute a so-called token packet represented by TP which is then stored in a node drive register NDR. It is to be noted that execution of the processing at the node is also referred to as the execution of that node. In the case of the program shown in Fig. 1, execution of the node N1 is followed by execution of the nodes N2 and N3. Subsequently, the node N4 is executed, which is followed by executions of the node N5 and thence node N6. It is not previously determined by the program which of the nodes N2 and N3 is to be executed first. The sequence of execution of these nodes N2 and N3 is determined at the time of execution.

Fig. 2 shows schematically a general arrangement of a computer according to an embodiment of the invention. In the figure, PU1 to PUm denote $\underline{m}$ processor units for executing the processings such as those mentioned above. A symbol MM denotes a main memory (in which control flow programs and data are stored), and NDR denotes the node drive register provided according to the teaching of the present invention. The main memory MM and the node drive register NDR may be constituted by multiport memories, respectively, which can be accessed

0118781

simultaneously by all the processors.  The main memory MM is adapted to store programs and the data such as a, b, c, d and e.

The node drive register NDR contains words of which format is shown in Fig. 3.  In this figure, NPM represents the memory location at which the node pointer NPR of the associated token packet TP is stored, and TC1 to TCn represent the location, at which the control tokens are stored.  A symbol TS denotes a location where (status data of a token packet and) data representative of the status of this word are stored.  Each of the locations TC1 to TCn is constituted by a counter which is incremented upon storage of one control token and decremented upon reading-out of one control token.  In order to indicate the executable node, it is required to store the token packets having the same node pointer in a set in the NDR. To this end, the node drive register or NDR is imparted with the associative memory function so that it can be accessed with the aid of the node pointer placed at the location NPM.

Fundamental operations of the computer system are as follows:

1)    The processor unit PU fetches from the node drive register NDR the token packet containing the control tokens required for execution of one node (referred to as the complete token packet). At that time, indicator I placed in the location TS is set for indicating that the associated word is in the course of being accessed.

2)    The processor unit PU fetches data from the main memory for executing the processing of a node which is indicated as being executable by the node pointer NPR of the CTP read out at the step 1).

3) Upon completion of the processing, the pointer indicating the node which is to be executed subsequently is combined with the control token to create a new token packet TP which is sent to the node drive register NDR. This corresponds to the placing of the control token on the output or outgoing arc of the executed node.

4) In the node drive register or NDR which has received the new token packet, the latter is stored in the word of the NDR which has the same node pointer as that of the received TP. This means that $TC_i$ (where $i$ is a value of 1 to $n - 1$) of the word having the node pointer of the same value is incremented by 1. If the word having the same node pointer is not found, the received token packet is stored in a new word. This operation is performed with the aid of the associative function of the node drive register or NDR. In this way, the control tokens for the same node are collected in a set.

5) The processor unit resets the indicator I of the token packet TP read out at the step 1) when all the token packets TP have been sent out, whereupon the value of $TC_j$ (where $j$ is a variable determined in dependence on the node to which the token packet TP is sent and which has the number of the input arcs equal to $j$) is decreased by 1. Operation goes to the step 1).

The steps mentioned above are performed for all the processors so that a plurality of the control token packets are read out for executing a plurality of nodes simultaneously.

0118781

The NDR is constituted by a multiport memory imparted with the associative memory function and thus may be of a complicated structure. However, in view of the fact that the number of the control token packets required for all the processing units PU of the computer to operate simultaneously is at most equal to the number of the processing units PU, the words of NDR will not amount to an enourmous number, giving rise to no problem in practice.

The computer according to the invention is capable of performing the data flow processing as well, because the data flow control processing is a sort of the control flow processsing in respect that the data flow along with the control tokens.

As will be appreciated from the foregoing, the present invention has proposed a parallel processing computer which is capable of executing both control flow programs and data flow programs with a simplified structure.

What is claimed:

1.      A control flow parallel computer system comprising:

a plurality of processors;

a main memory means accessible by said plurality of processors; and

node drive register means accessible by said plurality of processors, said node drive register storing a plurality of words, each of said words including a location for storing a pointer for indicating an instruction to be executed, and one or more locations  for storing control tokens for indicatng when the instruction indicated by said pointer is to be executed.

2.      A system as set forth in claim 1 wherein said word also includes a location for storing an indication that all tokens associated with the pointer of that word are being stored, thereby indicating the storage of a complete packet designating that the instruction designated by the pointer of that word is ready for execution.

3.      A system as set forth in claim 2 wherein said main memory means and said node drive register means are multiport memories which can be accessed by a plurality of said processors simultaneously whereby a plurality of

0118781

complete token packets may be accessed simultaneously and instructions designated by said complete token packets may be executed simultaneously.

4.      A method of performing parallel processing using a plurality of processors, a main memory for storing programs and data, and a register, said method comprising:

establishing a plurality of nodes, each node including an instruction to be executed;

in said register, storing a word associated with each of said nodes, each word having a location for storing a pointer indicating the associated node and locations for storing control tokens for the associated node, a pointer and all central tokens for one node comprising a complete token packet for each of said processors;

accessing said register and fetching a complete token packet, accessing said main memory and fetching data for executing the node indicated by the pointer of said complete token packet;

after execution storing a control token in each associated with a node to be executed subsequently to the executed node.

# FIG. 1

# FIG. 2

# FIG. 3